# FASCICULE DE BREVET EUROPEEN

(11) **EP 0 996 297 B1**
(45) Date de publication et mention de la délivrance du brevet: **08.10.2008**
(21) Numéro de dépôt: 99402526.0
(22) Date de dépôt: 14.10.1999
(51) Int. Cl.: H04Q 3/00

(54) **Passerelle entre un réseau de données et un réseau de services**
Gateway zwischen einem Datennetz und einem Dienstenetz
Gateway between a data network and a service network

(30) Priorité: 22.10.1998 FR 9813247
(43) Date de publication de la demande: 26.04.2000
(73) Titulaire: Alcatel Lucent, 75008 Paris (FR)
(72) Inventeur: Couturier, Alban, 92320 Chatillon (FR)
(74) Mandataire: Korakis-Ménager, Sophie

(56) Documents cités:
- EP-A- 0 726 682
- EP-A- 0 873 024
- WO-A-97/40635
- WO-A-98/28885
- GB-A- 2 318 701

## Description

La présente invention concerne une passerelle entre deux réseaux de données, permettant à un premier réseau d'accéder à des services dans des serveurs d'application situés sur un deuxième réseau. Une application de l'invention concerne un réseau intelligent. Un réseau intelligent comprend un réseau de service et un réseau de transport de la voix ou de données.

Le réseau de services peut avoir une architecture distribuée reposant sur une conception orientée objet. Une architecture bien connue est l'architecture CORBA pour *Common Object Request Broker Architecture* de l'OMG pour *Object Management Group* en anglais. Il comprend des serveurs d'application, appelés encore point de contrôle de service dans le vocabulaire spécialisé des réseaux intelligents. Les services sont donc installés sur différents serveurs d'application en divers endroits géographiques, chaque serveur comprenant un ordinateur ou un ensemble d'ordinateurs généralement connecté à au moins une base de données. Dans la suite, on utilise aussi bien le terme serveur d'application que son acronyme anglais SCP (pour *Switching Control Point*). Suivant une architecture basée sur CORBA, le SCP est lui-même distribué.

Des noeuds du réseau de transport établissent des dialogues avec les serveurs d'application du réseau de service par un réseau de signalisation. Ces noeuds du réseau de transport sont en pratique différents systèmes aptes à prendre en main un appel. Ce sont par exemple des commutateurs d'accès aux services et des périphériques intelligents. Ces derniers sont en général des systèmes à interface vocale, qui peuvent être adjoints aux commutateurs. Dans la suite, on utilise l'acronyme anglais SSP (pour *Switching Service Point*) pour désigner le commutateur et celui de IP (pour *intelligent peripheral*) pour le périphérique intelligent.

Actuellement, on propose que le protocole de communication des noeuds du réseau (sur le réseau de signalisation) soit différent du protocole de communication du réseau de services et donc des SCP. Par exemple, le protocole des messages utilisé par le réseau de services est un protocole à base de requêtes objet, comme par exemple le protocole CORBA, tandis que le protocole des messages utilisé par les noeuds du réseau de transport sera par exemple un protocole INAP pour *Intelligent Network Application Protocol*, défini par la série de recommandations Q.12xx de l'ITU-T (*International Telecommunication Union-Telecommunication standardization sector*), et qui n'est pas du tout à base de requêtes objet.

Une solution simple pour résoudre ce problème technique consiste à utiliser une passerelle de traduction, pour traduire les messages INAP issus des noeuds du réseau de transport et destinés aux serveurs d'application, en des messages compréhensibles pour les serveurs d'application et inversement. La demande de brevet EP 0873024 décrit une telle passerelle de traduction.

Une telle passerelle de traduction traduit chacun des messages du dialogue qui s'instaure entre les différents noeuds du réseau de transport sollicités par un appel d'un service donné (ou en d'autres termes, pour une session de service donnée) et un serveur d'application qui offre ce service.

On a donc autant de messages en entrée que de messages en sortie de la passerelle.

Un but de l'invention est la réduction du nombre des messages échangés avec le réseau de services, pour améliorer ses performances en réduisant l'encombrement sur ce réseau, plus particulièrement dans le cas où l'appel d'un service sollicite plusieurs noeuds du réseau de transport, typiquement un commutateur d'accès aux services SSP et un périphérique intelligent de ce réseau.

En effet, dans l'état de la technique, un appel sur le réseau intelligent est reçu par un SSP du réseau de transport. S'il s'agit d'un appel d'un service particulier, ceci est détecté par le commutateur SSP qui entame un dialogue avec un serveur d'application SCP qui offre ce service (ou, en d'autres termes, sur lequel tourne ce service).

Certains services, par exemple les services impliquant une authentification de l'appelant, nécessitent des informations qui ne peuvent être obtenues que par le biais d'un périphérique intelligent. Le serveur SCP demande alors au commutateur SSP de rerouter l'appel sur un périphérique intelligent et ce dernier entame un dialogue avec le SCP, pour obtenir des informations complémentaires. Ce périphérique intelligent peut-être un périphérique associé au commutateur, c'est à dire directement accessible par lui, ou un périphérique intelligent associé à un autre commutateur du réseau de transport.

On voit que le SCP doit donc gérer deux dialogues différents pour le même appel de service, un dialogue avec le SSP et un dialogue avec le périphérique intelligent.

Ce dialogue du SCP avec le périphérique intelligent peut être direct, dans le cas où le protocole de communication associé au périphérique est le même que celui du SCP, c'est à dire par exemple, le protocole CORBA, ou indirect, par la passerelle, si le protocole du périphérique intelligent est différent, et qu'il suit notamment le protocole du SSP.

Un but de l'invention est d'améliorer les performances du réseau de services dans cette configuration d'architecture intelligente dans laquelle plusieurs noeuds du réseau de transport peuvent être sollicités pour un même appel de service.

Dans l'invention, on cherche à réduire le nombre de messages et on cherche à avoir une meilleure modularité des codes (programmes) permettant un meilleur taux de réutilisation.

Ce but est atteint dans l'invention dans une passerelle sur laquelle on déporte (on distribue) des traitements logiciels habituellement exécutés sur les systèmes informatiques (serveurs d'application) sur lesquels sont physiquement installés les services.

La passerelle comprend ainsi des éléments représentants de ces services.

Quand un appel pour un service transmis par un SSP est reçu par la passerelle, cette dernière associe un élément représentant du service appelé. Cet élément représentant assure un traitement logiciel qui comprend le contrôle du dialogue avec le SSP pour récolter toutes les informations que peut fournir le SSP concernant cet appel.

Selon l'invention, quand cet appel est routé sur un périphérique intelligent et que ce dernier envoie un message correspondant vers la passerelle, la passerelle associe cet appel du périphérique à l'élément représentant précédemment associé au SSP.

Ainsi, un seul élément représentant est utilisé pour un même appel de service sollicitant plusieurs noeuds du réseau de transport.

Telle que caractérisée, l'invention concerne donc une passerelle entre deux réseaux de données, permettant à un premier réseau d'accéder à des services situés dans des serveurs d'application du deuxième réseau, le premier réseau comprenant différents noeuds susceptibles d'être sollicités pour un appel à un service donné, les messages de l'un au moins des noeuds du premier réseau suivant un protocole différent du protocole des messages dudit serveur d'application.

Selon l'invention, cette passerelle est telle :
- qu'elle comprend des éléments représentants des services aptes à gérer les différents protocoles,
- qu'elle associe un élément représentant pour un dialogue avec un noeud du premier réseau pour l'appel d'un service donné et
- qu'elle associe le même élément représentant pour un dialogue avec un autre noeud du premier réseau relatif au même appel de service.

Selon l'invention, l'élément représentant contrôle les dialogues avec les noeuds du premier réseau pour cet appel de service pour récolter toutes les informations nécessaires à transmettre à un serveur d'application offrant ledit service.

Le contrôle des dialogues est effectué de façon autonome par l'élément représentant, pour au moins une partie de ces dialogues.

En outre, on prévoit que l'élément représentant compose des messages en assemblant les informations collectées au moyen des dialogues avec les deux noeuds du premier réseau.

Enfin, on prévoit que l'élément représentant comprend un traitement logiciel permettant d'adopter un comportement particulier correspondant à une demande de spécialisation du service ou d'un sous-service, qui résulte des informations collectées.

D'autres caractéristiques et avantages de l'invention sont détaillés dans la description suivante faite à titre indicatif et non limitatif de l'invention et en référence aux figures dans lesquelles :
- la figure 1 est un schéma synoptique des liaisons entre un serveur d'application et des noeuds d'un réseau de transport pour une session d'appel, dans le cadre d'une architecture de réseau intelligent; et
- les figures 2 et 3 sont des schémas synoptiques des messages échangés avec une passerelle selon l'invention.

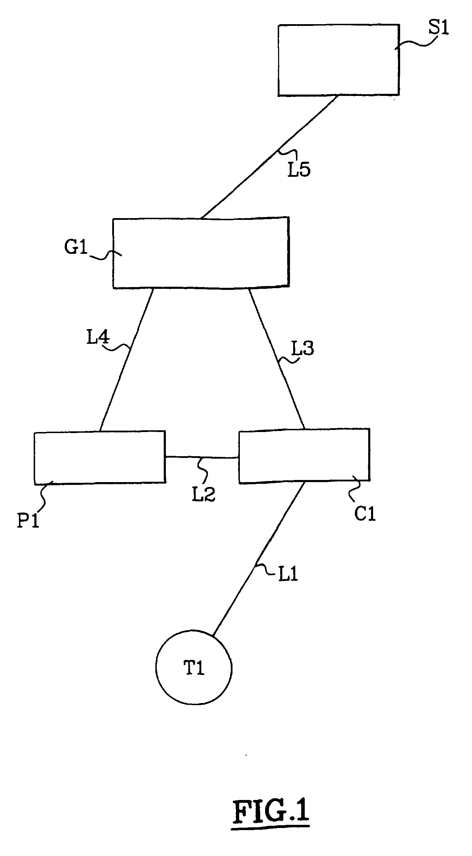

La figure 1 détaille les liaisons entre différents éléments impliqués dans une session d'appel de service dans un exemple d'architecture d'un réseau intelligent.

Un terminal d'appel T1 est connecté à un commutateur d'accès aux services SSP, référencé C1 sur la figure, par une liaison de transport L1.

Dans l'exemple, ce SSP C1 dispose d'un périphérique intelligent IP, référencé P1 sur la figure, sur lequel il peut rerouter directement un appel, par une liaison de transport, L2. Les liaisons L1 et L2 font parties du réseau de transport de la voix. Le SSP C1 et le périphérique P1 sont connectés à une passerelle G1par des liaisons de signalisation, respectivement L3 et L4.

Cette architecture est connue de l'homme du métier dans le cadre d'une passerelle dont la fonction se limite exclusivement à la traduction des messages entre le SSP et l'IP d'une part et un serveur d'application SCP d'autre part.

Dans l'invention, cette passerelle se transforme en une passerelle intelligente, de manière à assurer la gestion des dialogues avec des noeuds du réseau de transport.

Dans une réalisation préférée de l'invention, la passerelle compose des messages pour un serveur d'application offrant le service appelé, en assemblant, de façon intelligente, les informations collectées au moyen de ces dialogues.

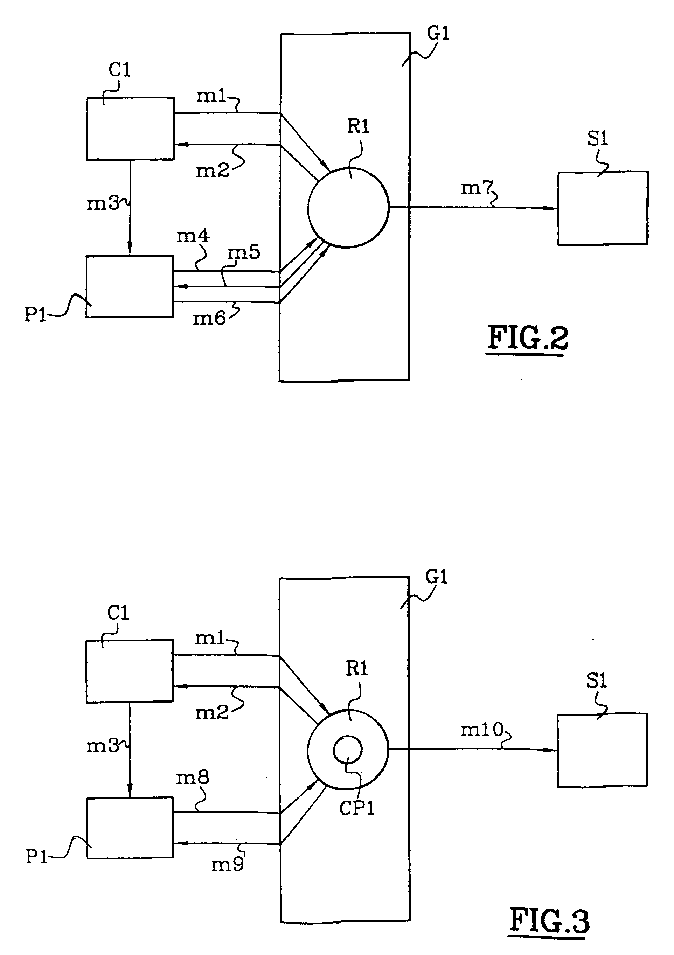

C'est ce qui est représenté sur les figures 2 et 3, dans deux exemples d'appel de services pour lesquels l'appelant a besoin d'être authentifié. Ce sont des exemples typiques d'applications pour lesquelles le SSP doit re-router l'appel sur un périphérique intelligent IP du réseau de transport.

Selon l'invention, la passerelle G1 comprend des éléments représentants des services. Chaque élément représentant est un objet ou un groupe d'objets (au sens de la conception orientée objet), qui permet de gérer un dialogue type avec des noeuds du réseau de transport pour un ou plusieurs services.

Dans l'exemple de la figure 2, le SSP C1 qui a reçu un appel du terminal T1 correspondant à un service, envoie un premier message m1 vers la passerelle G1, comprenant notamment le numéro d'appel. Cette passerelle associe un élément représentant du service appelé, référencé R1 sur la figure. Cet élément représentant renvoie alors un message m2 indiquant au SSP qu'il doit re-router l'appel sur un périphérique intelligent IP, pour permettre un dialogue, en général vocal, entre le périphérique et l'appelant sur le terminal T1, dans le but de récolter des informations complémentaires. Ce message m2 comprend une information d'identification de l'appel, à envoyer à l'IP, pour permettre à la passerelle de faire une corrélation entre l'appel du SSP et l'appel de l'IP qui doit suivre.

Comme dans l'exemple, le SSP dispose d'un IP P1 par liaison directe, il peut re-router l'appel sur cet IP P1 et lui envoyer un message correspondant m3, comprenant notamment l'information d'identification.

Le périphérique intelligent envoie alors un message m4 de demande d'assistance à la passerelle G1, avec l'information d'identification de l'appel. La passerelle peut donc renvoyer ce message à l'élément représentant R1 déjà associé au SSP. Cet élément représentant indique alors au périphérique une information à collecter, dans un message m5. Dans le cas d'un accès à un service nécessitant une authentification, c'est le numéro d'identification. Le périphérique intelligent obtient cette information du terminal appelant T1, puis renvoie alors un message m6 vers la passerelle rapportant l'information collectée.

Dans l'exemple, l'élément représentant dispose alors de toutes les informations nécessaires pour accéder au service appelé.

Selon l'invention, il compose un message m7 vers un serveur d'application offrant ce service. Ce message m7 rend compte de toutes les informations collectées par les deux dialogues avec le SSP et avec l'IP.

Dans un perfectionnement représenté à la figure 3, pour un exemple d'accès à un service comprenant un menu, sur réception du message m4, l'élément représentant R1 envoie un message m8 à l'IP lui indiquant qu'il doit demander à l'appelant de sélectionner une spécialisation du service ou d'un sous-service de celui-ci, à choisir dans un menu.

L'IP lui renvoie l'information collectée dans un message m9. L'élément représentant peut alors envoyer un message m10 vers un serveur d'application offrant le service appelé.

Dans l'invention, l'élément représentant est en outre capable d'adopter un comportement particulier CP1, c'est à dire un traitement logiciel particulier correspondant à la spécialisation du service accédé ou d'un sous-service de celui-ci. Par exemple, si cette spécialisation correspond à un appel à facturation partagée, il peut lancer un traitement logiciel particulier correspondant à l'enregistrement du début et de la fin du décrochage.

La passerelle selon l'invention comprend en pratique des piles de protocole, pour recevoir des messages transmis par des noeuds du réseau de transport et un élément représentant de la passerelle.

Par exemple, dans le cas où les commutateurs SSP utilisent le protocole INAP, la passerelle comprend une pile de protocole INAP.

Les périphériques intelligents utilisant ce même protocole, passent par cette même pile.

Les noeuds du réseau utilisant un autre protocole, typiquement, les périphériques intelligents utilisant le protocole CORBA, passent par une pile de protocole CORBA.

On remarquera que, dans les exemples décrits, à titre purement explicatif, d'appel de services utilisant une passerelle selon l'invention, la passerelle contrôle de façon autonome les dialogues avec les noeuds du réseau concernés par l'appel d'un service, au moins pour la partie décrite de collection des informations nécessaires avant d'accéder au service proprement dit sur un serveur d'application. Ensuite, dans la phase d'accès de ce service, ces dialogues avec le noeud du réseau gérés par la passerelle peuvent être téléguidés par le serveur d'application concerné.

L'invention qui vient d'être décrite est particulièrement intéressante dans le cadre des réseaux intelligents. Elle s'applique notamment, mais pas exclusivement, à des réseaux intelligents dans lequel les serveurs d'application utilisent un protocole à base de requêtes objet, comme le protocole CORBA.

La présente invention permet d'améliorer considérablement la modularité du réseau et d'améliorer ses performances. Une limitation concerne la capacité de dialogue avec un périphérique intelligent. En effet, les dialogues possibles que la passerelle peut gérer sont figés et un nouveau service doit pouvoir s'y adapter. Pour cela, on peut toujours prévoir la possibilité d'un dialogue direct entre l'IP et le SCP.

## Revendications

1. Passerelle (G) entre deux réseaux de données, permettant à un premier réseau d'accéder à des services situés dans des serveurs d'application (S1) du deuxième réseau, le premier réseau comprenant différents noeuds (C1, P1) susceptibles d'être sollicités pour un appel à un service donné, les messages de l'un au moins des noeuds du premier réseau suivant un protocole différent du protocole des messages desdits serveurs d'application, passerelle **caractérisée :**
- **en ce qu'**elle comprend des éléments représentants (R1) des services aptes à gérer les différents protocoles,
- **en ce qu'**elle associe un élément représentant (R1) pour un dialogue avec un noeud (C1) du premier réseau pour l'appel d'un service donné et
- **en ce qu'**elle associe le même élément représentant (R1) pour un dialogue avec un autre noeud (P1) du premier réseau relatif au même appel de service.

2. Passerelle selon la revendication 1, **caractérisée en ce que** ledit élément représentant (R1) contrôle les dialogues avec lesdits noeuds du premier réseau pour ledit appel de service pour collecter toutes les informations nécessaires à transmettre à un serveur d'application offrant ledit service.

3. Passerelle selon la revendication 2, **caractérisé en ce que** ce contrôle est effectué de façon autonome par ledit élément représentant, pour au moins une partie de ces dialogues.

4. Passerelle selon l'une quelconque des revendications précédentes, **caractérisée en ce que** l'élément représentant compose des messages en assemblant des informations collectées au moyen des dialogues avec les deux noeuds du premier réseau, ces messages étant transmis à un serveur d'application offrant ledit service.

5. Passerelle selon la revendication 2 ou 3, **caractérisée en ce que** ledit élément représentant adopte un comportement particulier (CP1) correspondant à une demande de spécialisation du service accédé, ou d'un sous-service, qui résulte des dialogues entre ledit élément représentant et les dits noeuds du premier réseau.

6. Passerelle selon l'une quelconque des revendications précédentes, **caractérisé en ce que** chaque élément représentant est un objet ou un groupe d'objets.

7. Réseau intelligent comprenant une passerelle selon l'une quelconque des revendications 1 à 6.

8. Réseau intelligent selon la revendication 7, **caractérisé en ce que** le protocole des messages des serveurs d'application (S) est un protocole à base de requêtes objet.

9. Réseau intelligent selon la revendication 8, **caractérisé en ce que** ledit protocole est conforme aux spécifications CORBA.

## Claims

1. Gateway (G) between two data networks, for enabling a first network to access services in application servers (S1) of the second network, the first network comprising different nodes (C1, P1) susceptible of being involved in a call to a given service, the messages from at least one of the nodes of the first network conforming to a protocol different from the protocol of the messages from said application servers, the gateway being **characterised:**
- **in that** it comprises elements (R1) representing the services which are adapted to manage the different protocols;
- **in that** it associates a representative element (R1) for a dialogue with a node (C1) of the first network for the call of a given service; and
- **in that** it associates the same representative element (R1) for a dialogue with another node (P1) of the first network relating to the same service call.

2. Gateway according to claim 1, **characterised in that** said representative element (R1) controls the dialogues with said nodes of the first network for said service call to collect all the information it is necessary to transmit to an application server offering said service.

3. Gateway according to claim 2, **characterised in that** control is effected autonomously by said representative element for at least a part of said dialogues.

4. Gateway according to any one of the preceding claims, **characterised in that** said representative element composes messages by assembling information collected by means of said dialogues with the two nodes of the first network, which messages are transmitted to an application server offering said service.

5. Gateway according to claim 2 or 3, **characterised in that** said representative element adopts a particular behaviour (CP1) corresponding to a request for specialisation of the accessed service or a sub-service which results from the dialogues between said representative element and said nodes of the first network.

6. Gateway according to any one of the preceding claims, **characterised in that** each representative element comprises one or more objects.

7. Intelligent network including a gateway according to any one of claims 1 to 6.

8. Intelligent network according to claim 7, **characterised in that** the protocol for messages from the application servers (S) is a protocol based on object requests.

9. Intelligent network according to claim 8, **characterised in that** said protocol conforms to the CORBA specifications.

## Patentansprüche

1. Gateway (G) zwischen zwei Datennetzen, über welche ein erstes Netz Zugang zu Diensten hat, welche sich in Anwendungsservern (S1) des zweiten Netzes befinden, wobei das erste Netz verschiedene Knoten (C1, P1) umfasst, welche für einen Ruf an einen gegebenen Dienst beansprucht werden können, wobei die Nachrichten von mindestens einem der Knoten des ersten Netzes gemäß einem Protokoll, das sich von dem Protokoll der Nachrichten der besagten Anwendungsserver unterscheidet, wobei das Gateway **dadurch gekennzeichnet ist:**
- **dass** es Repräsentanten-Elemente (R1) der Dienste umfasst, welche fähig sind, die verschiedenen Protokolle zu verwalten,
- **dass** es ein Repräsentanten-Element (R1) für einen Dialog mit einem Knoten (C1) des ersten Netzes für den Aufruf eines gegebenen Dienstes assoziiert, und
- **dass** es dasselbe Repräsentanten-Element (R1) für einen Dialog mit einem anderen Knoten (P1) des ersten Netzes, welches dieselbe Dienstanforderung betrifft, assoziiert.

2. Gateway nach Anspruch 1, **dadurch gekennzeichnet, dass** das besagte Repräsentanten-Element (R1) die Dialoge mit den besagten Knoten des ersten Netzes für den besagten Dienstaufruf steuert, um alle erforderlichen an einen den besagten Dienst anbietenden Anwendungsserver zu sendenden Informationen zu sammeln.

3. Gateway nach Anspruch 2, **dadurch gekennzeichnet, dass** die Steuerung für mindestens einen Teil dieser Dialoge eigenständig von dem Repräsentanten-Element ausgeführt wird.

4. Gateway nach einem beliebigen der vorstehenden Ansprüche, **dadurch gekennzeichnet, dass** das Repräsentanten-Element Nachrichten zusammenstellt, indem es die anhand der Dialoge mit den beiden Knoten des ersten Netzes gesammelten Informationen zusammenfügt, wobei diese Nachrichten an einen Anwendungsserver gesendet werden, welcher den besagten Dienst anbietet.

5. Gateway nach Anspruch 2 oder 3, **dadurch gekennzeichnet, dass** das besagte Repräsentanten-Element ein besonderes Verhalten (CP1) annimmt, welches einer Spezialisierungsanfrage des adressierten Dienstes oder eines Unterdienstes, welcher sich aus den Dialogen zwischen dem besagten Repräsentanten-Element und den besagten Knoten des ersten Netzes ergibt, entspricht.

6. Gateway nach einem beliebigen der vorstehenden Ansprüche, **dadurch gekennzeichnet, dass** jedes Repräsentanten-Element ein Objekt oder eine Gruppe von Objekten ist.

7. Intelligentes Netz, welches ein Gateway nach einem beliebigen der Ansprüche 1 bis 6 umfasst.

8. Intelligentes Netz nach Anspruch 7, **dadurch gekennzeichnet, dass** das Protokoll der Nachrichten der Anwendungsserver (S) ein auf einer Objektanforderung basierendes Protokoll ist.

9. Intelligentes Netz nach Anspruch 8, **dadurch gekennzeichnet, dass** das besagte Protokoll den CORBA-Spezifikationen entspricht.
